# EUROPÄISCHE PATENTANMELDUNG

(11) **EP 0 599 031 A1**
(43) Veröffentlichungstag der Anmeldung: **01.06.1994**
(21) Anmeldenummer: 93116033.7
(22) Anmeldetag: 05.10.1993
(51) Int. Cl.: B61C 17/00, B60K 1/00, B60K 11/00, E05D 15/50, B60R 9/055

(54) **Dachcontainer zur Aufnahme elektrischer und elektromechanischer Komponenten der Antriebs- und Fahrzeugsteuerung von Schienenfahrzeugen und Trolleybussen**

(30) Priorität: 23.11.1992 DE 9215814 U
(71) Anmelder: Kiepe Elektrik GmbH, D-40599 Düsseldorf (DE)
(72) Erfinder: Knipp, Eckhard, D-40878 Ratingen (DE); Kohls, Emil, D-40229 Düsseldorf (DE); Rombey, Horst, D-40599 Düsseldorf (DE); Textor, Jürgen, D-40789 Monheim (DE)
(74) Vertreter: Feder, Wolf-Dietrich, Dr. Dipl.-Phys.

(57) **Zusammenfassung**

Ein Dachcontainer zur Aufnahme elektrischer und elektromechanischer Komponenten der Antriebs- und Fahrzeugsteuerung von Schienenfahrzeugen und Trolleybussen. Der Dachcontainer besitzt ein als selbsttragende Leichtmetallkonstruktion ausgebildetes Gehäuse (1) mit einem das Gehäuse (1) ganzflächig überdeckenden, einteiligen Deckel (2), der mit dem Gehäuse (1) an den Oberkanten der beiden Seitenwände (1.1, 1.2) des Gehäuses über jeweils lösbare Gelenkverbindungen (4.1 - 7.1, 4.2 - 7.2) verbunden ist.

## Beschreibung

Die Erfindung betrifft einen Dachcontainer zur Aufnahme elektrischer und elektromechanischer Komponenten der Antriebs- und Fahrzeugsteuerung von Schienenfahrzeugen und Trolleybussen mit einem im wesentlichen rechteckigen, einen Boden, zwei Seitenwände und zwei Stirnwände aufweisenden Gehäuse, das an seiner Oberseite mit einer aufklappbaren Abdeckung versehen ist.

Bei Fahrzeugen des öffentlichen Personennahverkehrs werden Geräte und Komponenten der Antriebs- und Fahrzeugsteuerung traditionell an den Fahrzeuglängsseiten in geschlossenen Räumen unter dem Fußboden untergebracht. Bekannt sind auch Anordnungen mittig unter dem Fahrzeugboden, im Heck (speziell bei Trolleybussen) und auf dem Fahrzeugdach.

Da bei neueren Fahrzeugentwicklungen eindeutig die Niederflurbauweise bevorzugt wird, stehen Einbauräume unter dem Fahrzeug nicht mehr zur Verfügung. Es besteht daher das Bedürfnis, die Komponenten der Antriebs- und Fahrzeugsteuerung auf dem Fahrzeug anzuordnen. Zur Aufnahme dieser Komponenten dienen Dachcontainer der eingangs erwähnten Bauart. Es ist bekannt, derartige Dachcontainer mit einer Abdeckung zu versehen, die aus zwei Deckeln besteht, die in der Mitte des Gehäuses schwenkbar befestigt sind und an beiden Seiten des Gehäuses hochklappbar sind. Eine derartige Abdeckung hat den Nachteil, daß insbesondere die in Gehäusemitte angeordneten Komponenten schlecht zugänglich sind. Ein weiterer Nachteil besteht darin, daß beim Hochklappen der Deckel Wasser oder Schnee nach der Gehäusemitte hin abläuft und deshalb in Gehäusemitte aufwendige Auffangmittel vorgesehen sein müssen. Trotzdem besteht die Gefahr, daß Wasser ins Gehäuseinnere gelangt.

Der Erfindung liegt die Aufgabe zugrunde, einen Dachcontainer, der eingangs und im Oberbegriff des Schutzanspruchs 1 angegebenen Bauart so auszugestalten, daß einerseits eine besonders leichte Bauweise und gute Zugänglichkeit sämtlicher im Gehäuse angeordneter Komponenten von beiden Seiten her sichergestellt ist, andererseits aber auch die bei der Montage auf dem Dach unbedingt erforderliche Staub- und Wasserdichtigkeit vollständig gewährleistet ist.

Die Lösung dieser Aufgabe erfolgt erfindungsgemäß mit den Merkmalen aus dem kennzeichnenden Teil des Schutzanspruchs 1. Vorteilhafte Ausführungsformen der Erfindung sind in den Unteransprüchen beschrieben.

Wie weiter unten anhand eines Ausführungsbeispiels näher erläutert, kann der erfindungsgemäße Dachcontainer auf dem Fahrzeugdach so montiert werden, daß er gut von beiden Seiten her zugänglich ist, d.h. das Fahrzeugdach ist längs der Seitenwände des Dachcontainers begehbar. Der Dachcontainer ist in Leichtbauweise, beispielsweise als selbsttragende Aluminium-Schweißkonstruktion aufgebaut. Es sind jedoch auch andere schweißbare oder klebbare Materialien denkbar. Im Gegensatz zu den bekannten Lösungen mit mehrteiligen Abdeckungen ist der erfindungsgemäße Dachcontainer an seiner Oberseite ganzflächig mit dem einteiligen Deckel verschlossen. Dieser kann wahlweise von beiden Längsseiten her geöffnet werden. Man erreicht hierdurch eine großzügige Zugänglichkeit aller Einbaukomponenten im Wartungs- bzw. Servicefall.

Wie weiter unten näher erläutert, kann der Deckel an den Stirnseiten über jeweils zwei Gasdruckfedern fixiert sein. Besondere Maßnahmen gewährleisten eine gute Staub- und Wasserdichtigkeit.

Im folgenden wird anhand der beigefügten Zeichnungen ein Ausführungsbeispiel für einen Dachcontainer nach der Erfindung näher erläutert.

In den Zeichnungen zeigen:
Fig. 1 eine Aufsicht auf einen Dachcontainer bei abgenommenem Deckel;
Fig. 2 in einer Seitenansicht von einer Stirnseite her einen auf dem Dach eines Fahrzeugs montierten Dachcontainer mit Deckel.
Fig. 3 eine Ansicht des Dachcontainers nach Fig. 2 in stark schematisierter Darstellungsweise in Richtung auf eine Seitenwand gesehen bei angehobenen Deckel;
Fig. 4 einen vergrößerten Teilschnitt nach der Linie IV/IV in Fig. 3 bei geschlossenem Deckel;
Fig. 5 einen vergrößerten Teilschnitt nach der Linie V/V in Fig. 1 bei geschlossenem Deckel;
Fig. 6 einen vergrößerten Teilschnitt nach der Linie VI/VI in Fig. 3 bei geöffnetem Deckel.

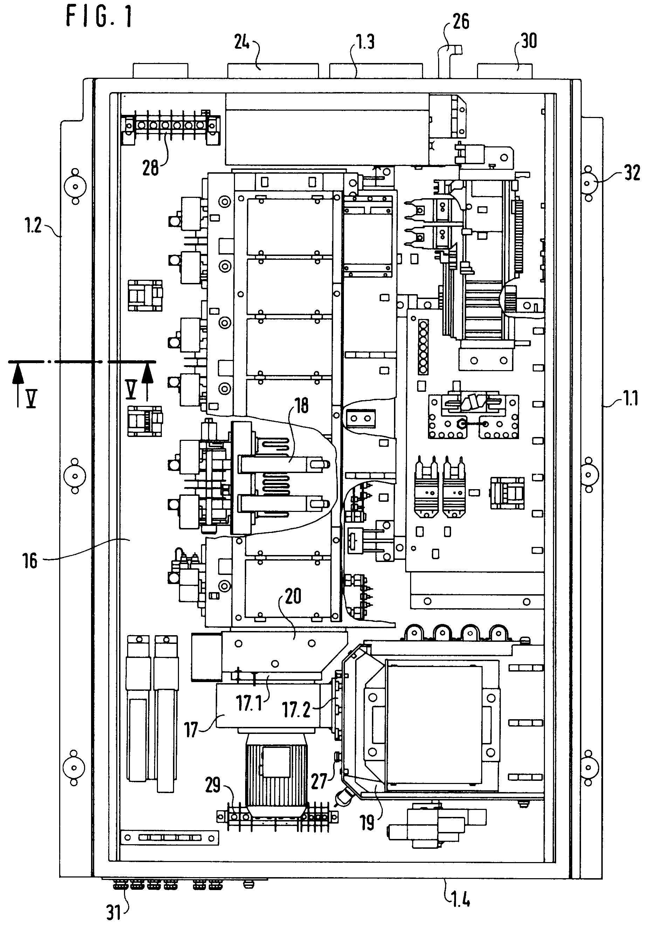

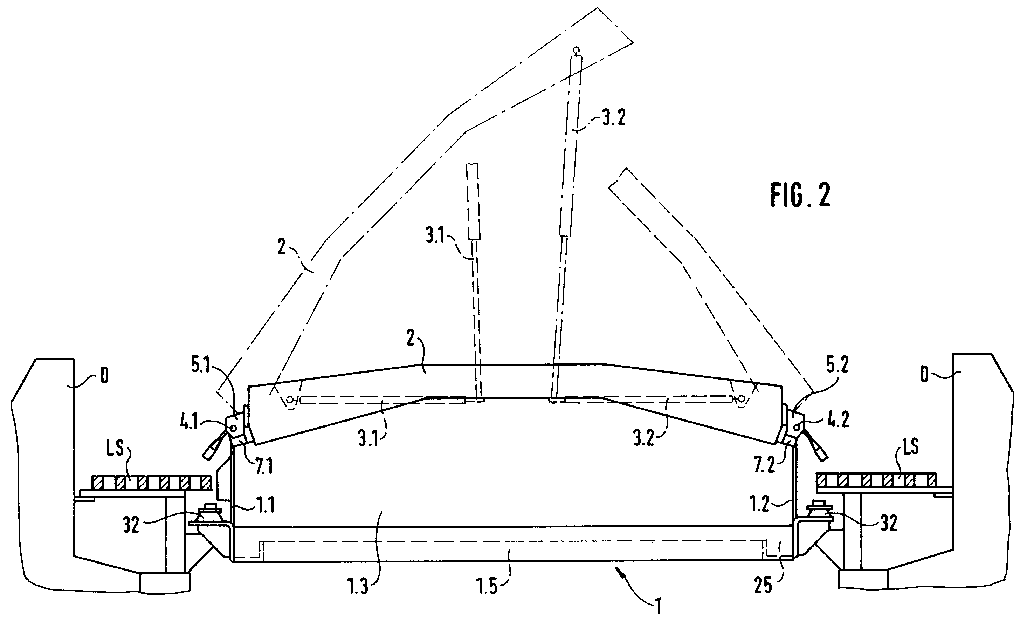

Der in den Fig. 1 bis 6 dargestellte Dachcontainer besteht aus einem Gehäuse 1 mit zwei Seitenwänden 1.1, 1.2, zwei Stirnwänden 1.3, 1.4 und einem Boden 1.5. Das Gehäuse 1 ist wie aus Fig. 2 ersichtlich, auf dem Dach D eines im übrigen nicht näher dargestellten Schienenfahrzeugs oder eines Trollybusses mittels Befestigungsvorrichtungen 32 in an sich bekannter Weise derart montiert, daß sich der Dachcontainer in Längsrichtung des Fahrzeugs erstreckt, wobei zu beiden Seiten des Gehäuses begehbare Längsstege LS angeordnet sind. Im folgenden wird die in der Längsmittelebene des Fahrzeugs liegende Richtung des Dachcontainers mit "Längsrichtung" bezeichnet.

Das Gehäuse ist als selbsttragende Leichtmetallkonstruktion ausgebildet, und an seiner Oberseite befindet sich eine Abdeckung, die als das Gehäuse ganzflächig überdeckender einteiliger Deckel 2 ausgebildet ist. Der Deckel 2 ist an seinen Seitenkanten 2.1, 2.2 mit dem Gehäuse 1 an den Oberkanten der beiden Seitenwände 1.1. und 1.2 über jeweils lösbare Gelenkverbindungen verbunden, die ein Aufklappen des Deckels nach beiden Richtungen ermöglichen, wie dies in Fig. 2 strichpunktiert bzw. gestrichelt angedeutet ist. Die Gelenkverbindungen zwischen dem Deckel 2 und dem Gehäuse 1 besitzen jeweils eine längs der beiden Seitenkanten 2.1 und 2.2 des Deckels 2 verlaufende Welle 4.1 bzw. 4.2, die in mit dem Deckel 1 festverbundenen Lagern 6.1 bzw. 6.2 drehbar gelagert ist. Die Welle 4.1 bzw. 4.2 ist in jeweils zwei an den Oberkanten der Seitenwände 1.1 bzw. 1.2 in einem vorgegebenen Abstand angeordnete Lagerböcke 7.1 bzw. 7.2 einsetzbar und in diesen Lagerböcken derart verriegelbar, daß nach der Verriegelung die Welle fest und unverdrehbar im Lagerbock fixiert ist, so daß ein Heraustreten der Welle aus dem Lagerbock verhindert ist.

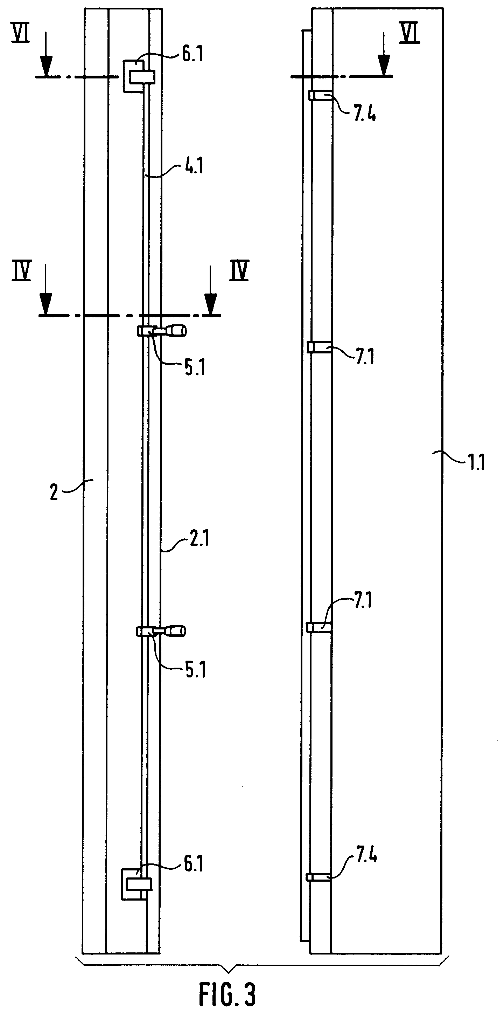

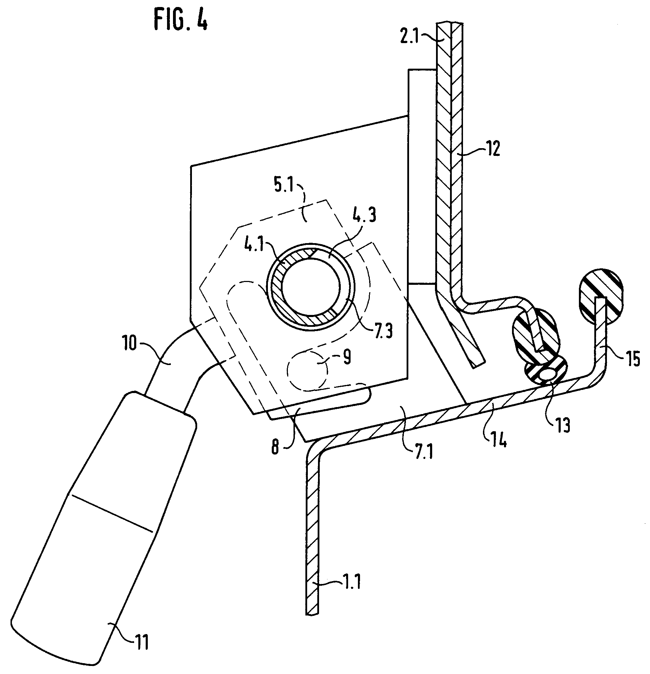

Einzelheiten der Verriegelungsvorrichtung sind den Fig. 3 und 4 zu entnehmen. Jeder der Lagerböcke 7.1 bzw. 7.2 besitzt eine Aufnahmeöffnung 7.3, deren innere Oberfläche einen Umfangswinkel von mehr als 180° umfaßt. Dies bedeutet, daß die Welle 4.1 bzw. 4.2 in die Aufnahmeöffnung des Lagerbocks nur einsetzbar ist, wenn sich eine an der Welle im Bereich des Lagerbocks angeordnete Flachstelle 4.3 in einer vorgegebenen Winkelstellung befindet, so daß die Welle infolge des durch die Flachstelle reduzierten Durchmessers in die Aufnahmeöffnung 7.3 einsetzbar ist, aber nach einem Verdrehen der Welle 4.1 bzw. 4.2 ein Herausnehmen oder Herausgleiten der Welle aus dem Lagerbock nicht mehr möglich ist. Wie Fig. 3 zu entnehmen, besitzt jede Welle 4.1 bzw. 4.2 zwei in einem vorgegebenen Abstand voneinander angeordnete Handhaben, die jeweils aus einer mit der Welle drehfest verbundenen Befestigungsschelle 5.1 bzw. 5.2 bestehen, an der ein Betätigungshebel 10 angeordnet ist, der an seinem äußeren Ende mit einem Handgriff 11 versehen ist. Auf diese Weise ist es möglich, durch Betätigung der Handhabe zum Öffnen oder Schließen die ausgewählte Welle 4.1 bzw. 4.2 in die für das Einsetzen oder Herausnehmen notwendige Winkelstellung zu bringen, bzw. nach dem Einsetzen die Welle in eine Verriegelungsstellung zu drehen, in der sie fest in den Lagerböcken gehaltert ist und damit eine feste Drehachse bildet, um die der Deckel 2 hochschwenkbar ist, wobei eine Relativdrehung zwischen der Welle 4.1 bzw. 4.2 und den Lagern 6.1 bzw. 6.2 am Deckel 2 stattfindet.

Zur zusätzlichen Sicherung der Welle 4.1 bzw. 4.2 in der Verriegelungsstellung in den Lagerböcken 7.1 bzw. 7.2 dient ein jeweils an der Befestigungsschelle 5.1 fest angeordnetes, hakenartiges Verriegelungselement 8, in welches beim Herunterschwenken der Handhabe 10-11 ein fest mit dem jeweiligen Lagerbock 7.1 bzw. 7.2 verbundener Verriegelungsbolzen 9 eingreift, so daß die Welle 4.1 bzw. 4.2 in der Verriegelungsstellung arretiert ist.

Im Bereich der beiden Stirnseiten 1.3 bzw. 1.4 des Gehäuses 1 ist der Deckel 2 über jeweils zwei Gasdruckfedern 3.1 bzw. 3.2 abstützbar. Diese Gasdruckfedern sind jeweils mit ihrem einen Ende am Deckel im Bereich seiner Außenkante verbunden, während das jeweilige andere Ende im Mittelbereich des Gehäuses befestigt ist. Die Anordnung der Anlenkpunkte der Gasdruckfedern und deren Ausbildung ist derart, daß sie bei geschlossenem Deckel kraftneutral sind, was bedeutet, daß der Deckel auch im unverriegelten Zustand durch sein Eigengewicht verschlossen bleibt, beim Öffnen des Deckels doch kraftunterstützend wirken und den geöffneten Deckel jeweils in der Offenstellung festhalten. Wie Fig. 2 zu entnehmen, ist je nach dem, an welcher Seite der Deckel geöffnet wird, jeweils das Gasdruckfedernpaar 3.1 oder 3.2 in Tätigkeit, während das jeweils andere Gasdruckfedernpaar in der kraftneutralen Lage bleibt.

Die den Witterungseinflüssen besonders ausgesetzte Lage des Dachcontainers macht eine besonders sorgfältige Dichtung des Deckels notwendig. Zu diesem Zweck besitzt der Deckel 2 an seinen, auf eine schräg nach außen abfallende Abkröpfung 14 der Gehäusewände (siehe Fig. 4 am Beispiel der Seitenwand 1.1) aufsetzenden Unterkanten ein umlaufendes Gummiabdichtprofil 13, das an einem mit dem Deckel verbundenen abgekröpften Halterungsblech 12 angeordnet ist. Weiterhin ist an den Oberkanten der Gehäusewände (siehe Fig. 4) anschließend an die Abkröpfung 14 und innerhalb des Aufsetzbereichs des Deckels 2 eine nach oben weisende Barriere 15 angeordnet, die zusammen mit der Unterkante des Deckels 2 eine Flüssigkeitsauffangrinne bildet. Das Anbringen des Abdichtungsprofils am Deckel 2 hat zusätzlich den Vorteil, daß bei zu Wartungsarbeiten geöffnetem Deckel die Gefahr einer Beschädigung des Gummeabdichtprofils gemindert wird.

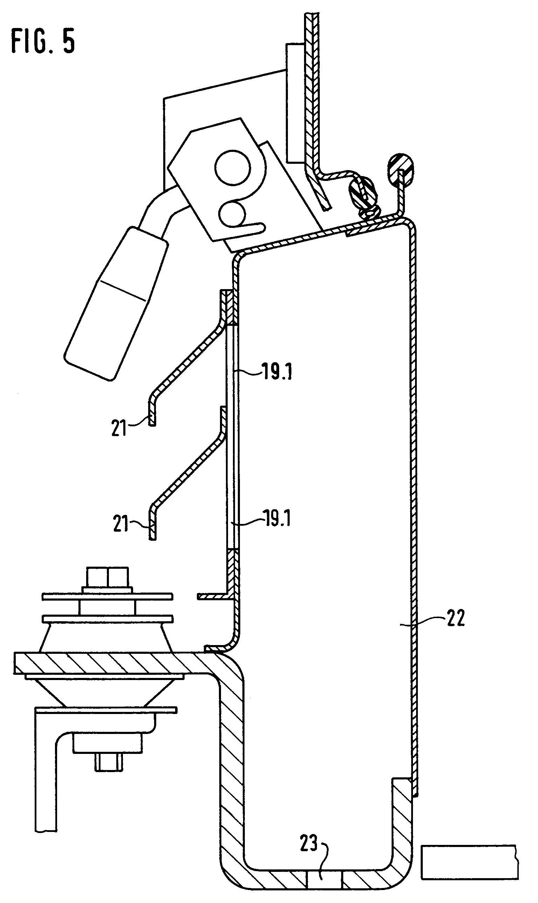

Die Verlustleistungen der elektronischen und elektromechanischen Bauelemente, die im Innenraum des Containers angeordnet sind, erzeugen Wärme, die eine Zwangsbelüftung erforderlich machen. Die erforderliche Kühlluft wird mittels eines Ventilators 17 erzeugt, der innerhalb des Gehäuses 1 angeordnet ist und dessen Ansaugöffnung 17.1 an einen sich in Längsrichtung des Gehäuses 1 erstreckenden Kühlkanal 20 angeschlossen ist. In diesem Kühlkanal sind die besonders verlustleistungsbehafteten Bauelemente 18 angeordnet. Der Kühlkanal 20 ist an durch eine der Stirnwände 1.1 des Gehäuses 1 geführte Rohrstutzen 24 angeschlossen. Diese Rohrstutzen 24 können in nicht eigens dargestellter Weise an Luftkanäle in Fahrzeugzwischenböden oder an den Fahrgastraum angeschlossen sein. Die Abluftöffnung 17.2 des Ventilators 17 ist über einen Überdruckraum 19 im Gehäuse 1 an in der einen Seitenwand 1.1 des Gehäuses 1 angeordnete Luftaustrittsöffnungen 19.1 angeschlossen. Wie Fig. 5 zu entnehmen, sind oberhalb dieser Luftaustrittsöffnungen 19.1 an der Außenseite der Seitenwand 1.1 Blechkiemen 21 zum Schutz gegen Regen und Schnee angeordnet. Diese Blechkiemen sind so gestaltet, daß durch den Austrittsquerschnitt keine Luftwiderstandserhöhung entsteht. Für den Fall, das unter extremen Bedingungen trotz der Blechkiemen 21 Regen oder Schnee in den Innenraum des Gehäuses 1 eindringt, ist innerhalb des Gehäuses 1 unterhalb der Luftaustrittsöffnung 21 eine vom Gehäuseinnenraum abgetrennte Sammelkammer 22 für eingetretenes Wasser angeordnet, in deren Boden eine in den Außenraum mündende Abflußöffnung 23 angeordnet ist, durch die das Wasser abfließen kann.

Im an die Ansaugöffnung 17.1 des Ventilators 17 angeschlossenen Kühlkanal entsteht im Betrieb ein Unterdruck, während in dem an die Abluftöffnung 17.2 angeschlossenen Überdruckraum, der vom übrigen Gehäuse durch Trennwände abgetrennt ist, ein Überdruck entsteht. Damit im restlichen Innenraum des Dachcontainers ein Druckausgleich herrscht, sind durch die Trennwände zwischen dem Überdruckraum 19 und dem übrigen Gehäuse staubdichte Belüftungstüllen 27 geführt.

Für den Fall, daß trotz der oben beschriebenen sorgfältigen Dichtungsmaßnahmen Wasser in den Dachcontainer gelangt, etwa durch den unverschlossenen Deckel o.ä., ist wie in Fig. 2 angedeutet, innerhalb des Gehäuses entlang der Seitenwände und der Stirnwände eine unterhalb des Gehäusebodens 1.5 liegende Wassersammelrinne 25 angeordnet, die mit einem in den Außenraum führenden Schlauchanschluß 26 (Fig. 1) verbunden ist, über den das Wasser abfließen kann. Auf diese Weise können auch mehrere Dachcontainer auf einem Dach über ein Schlauchsystem verbunden werden, das in eine gemeinsame Sammelrinne mündet.

Die Anordnung der elektrischen und elektromechanischen Bauelemente innerhalb des Gehäuses erfolgt in einer üblichen, an den jeweiligen Einsatzzweck angepaßten und an sich bekannten Weise und wird im folgenden nicht näher erläutert. Der elektrische Anschluß der Bauelemente erfolgt über innerhalb des Gehäuses angeordnete Verbindungsleisten 28 bzw. 29, die an Anschlüsse 30 bzw. 31 an der Außenseite des Gehäuses angeschlossen sind.

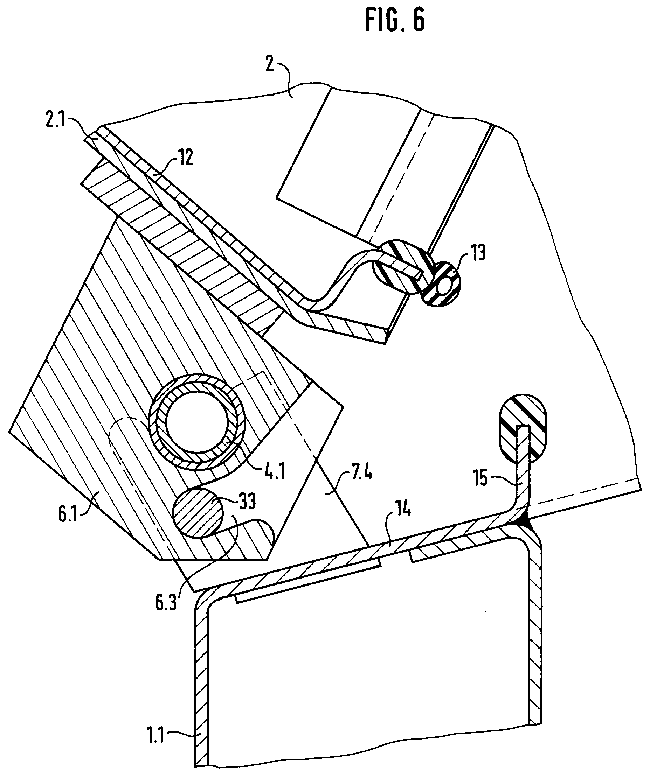

Um zu verhindern, daß bei geöffnetem Deckel 2 versehentlich die die Welle 4.1 bzw. 4.2 jeweils in den Lagerböcken 7.1 bzw. 7.2 verriegelnde Verriegelungsvorrichtung entriegelt wird und somit der Deckel 2 an beiden Seitenkanten vom Gehäuse abhebbar ist, ist an beiden Seitenkanten 2.1 bzw. 2.2 des Deckels 2 eine zweite Verriegelungsvorrichtung vorgesehen, die in Fig. 6 dargestellt ist. Jedes der Lager 6.1 bzw. 6.2 des Deckels 2 besitzt an seiner Unterseite eine schlitzartige Ausnehmung 6.3. Im Laufe der Öffnungsbewegung des Deckels 2 greift ab einem vorgegebenen Öffnungswinkel jeweils an den Lagern 6.1 bzw. 6.2 an der nicht öffnenden Seitenkante des Deckels ein Verriegelungsbolzen 33 in die Ausnehmung 6.3 ein, so daß ein Abheben des Deckels aus der Gelenkverbindung 4.1-7.1 bzw. 4.2-7.2 verhindert wird. Die Verriegelungsbolzen 33 sind an zusätzlichen Lagerböcken 7.4 befestigt, die an den Oberkanten der Seitenwände 1.1 bzw. 1.2 des Gehäuses angeordnet sind, und dadurch fest mit dem Gehäuse 1 verbunden sind.

## Patentansprüche

1. Dachcontainer zur Aufnahme elektrischer und elektromechanischer Komponenten der Antriebs- und Fahrzeugsteuerung von Schienenfahrzeugen und Trollybussen mit einem im wesentlichen rechteckigen, einen Boden, und zwei Seitenwände und zwei Stirnwände aufweisenden Gehäuse, das an seiner Oberseite mit einer aufklappbaren Abdeckung versehen ist, dadurch gekennzeichnet, daß das Gehäuse (1) eine selbsttragende Leichtmetallkonstruktion ist und die Abdeckung als das Gehäuse ganzflächig überdeckender einteiliger Deckel (2) ausgebildet ist, der mit dem Gehäuse (1) an den Oberkanten der beiden Seitenwände (1.1, 1.2) über jeweils lösbare Gelenkverbindungen (4.1-7.1, 4.2-7.2) verbunden ist.

2. Dachcontainer nach Anspruch 1 dadurch gekennzeichnet, daß die Gelenkverbindungen jeweils eine längs der beiden Seitenkanten (2.1, 2.2) des Deckels (2) verlaufende, mit dem Deckel drehbar verbundene Welle (4.1, 4.2) aufweisen, die in mindestens zwei, jeweils an einer der Oberkanten der Seitenwände (1.1, 1.2) mit vorgegebenen Abständen angeordnete Lagerböcke (7.1, 7.2) einsetzbar und in ihnen mittels erster Verriegelungsvorrichtungen (4.3-7.3, 5.1, 8 bis 11) derart verriegelbar ist, daß ein Heraustreten der Welle aus dem Lagerbock (7.1, 7.2) verhindert ist.

3. Dachcontainer nach Anspruch 2 dadurch gekennzeichnet, daß zur Bildung einer Verriegelungsvorrichtung jeder Lagerbock (7.1, 7.2) eine Aufnahmeöffnung (7.3) aufweist, welche die Welle (4.1, 4.2) auf einen Umfangswinkel größer als 180° umfaßt und jede Welle (4.1, 4.2) im Bereich eines Lagerbocks (7.1, 7.2) eine ihr Einsetzen in die Aufnahmeöffnung (7.3) des Lagerbocks (7.1, 7.2) in einer vorgegebenen Winkelstellung ermöglichende Flachstelle (4.3) besitzt und an jeder Welle (4.1, 4.2) mindestens eine, ein Verdrehen der Welle (4.1, 4.2) in den am Deckel (2) angeordneten Lagern (6.2, 6.2) ermöglichende Handhabe (5.1-10-11) angeordnet ist.

4. Dachcontainer nach Anspruch 3 dadurch gekennzeichnet, daß die Handhabe eine mit der Welle (4.1, 4.2) drehfest verbundene Befestigungsschelle (5.1, 5.2) aufweist, an der ein Betätigungshebel (10) angeordnet ist, der an seinem äußeren Ende mit einem Handgriff (11) versehen ist, und an der Befestigungsschelle (5.1) ein hakenartiges Verriegelungselement (8) angeordnet ist, in welches im verriegelten Zustand der Welle (4.1, 4.2) zusätzlich ein fest mit dem Lagerbock (7.1, 7.2) verbundener Verriegelungsbolzen (9) derart eingreift, daß die Handhabe im verriegelten Zustand der Welle (4.1, 4.2) arretiert ist.

5. Dachcontainer nach einem der Ansprüche 1 bis 4 dadurch gekennzeichnet, das jeweils im Bereich jeder der beiden Stirnseiten (1.3, 1.4) des Gehäuses (1) zwei Gasdruckfedern (3.1, 3.2) angeordnet sind, deren eines Ende jeweils mit dem Deckel (2) im Bereich seiner Außenkante (2.1, 2.2) verbunden ist, während das jeweilige andere Ende im Mittelbereich des Gehäuses (2) befestigt ist, wobei die Anordnung der Anlenkpunkte und die Ausbildung der Gasdruckfedern (3.1, 3.2) derart ist, daß sie bei geschlossenem Deckel (2) kraftneutral und beim Öffnen des Deckels (2) kraftunterstützend wirken und den Deckel jeweils in der geöffneten Stellung festhalten.

6. Dachcontainer nach einem der Ansprüche 1 bis 5 dadurch gekennzeichnet, daß der Deckel (2) an seinen auf eine schräg nach außen abfallende Abkröpfung (14) der Gehäusewände aufsetzenden Unterkanten ein umlaufendes Gummiabdichtprofil (13) aufweist und an den Oberkanten der Gehäusewände anschließend an die Abkröpfung (14) und innerhalb des Aufsetzbereichs des Deckels (2) eine nach oben weisende Barriere (15) angeordnet ist, die zusammen mit der Unterkante des Deckels (2) eine Flüssigkeitsauffangrinne bildet.

7. Dachcontainer nach einem der Ansprüche 1 bis 6 dadurch gekennzeichnet, daß innerhalb des Gehäuses (1) ein Ventilator (17) angeordnet ist, dessen Ansaugöffnung (17.1) an einen sich in Längsrichtung des Gehäuses (1) erstreckenden Kühlkanal (20) angeschlossen ist, in dem die besonders verlustleistungsbehafteten elektrischen und/oder elektromechanischen Bauelemente (18) angeordnet sind und der an durch eine der Stirnwände (1.3) des Gehäuses (1) geführte Rohrstutzen (24) angeschlossen ist, während die Abluftöffnung (17.2) des Ventilators (17) über einen Überdruckraum (19) im Gehäuse (1) an in einer Seitenwand (1.1) des Gehäuses angeordnete Luftaustrittsöffnungen (19.1) angeschlossen ist.

8. Dachcontainer nach Anspruch 7 dadurch gekennzeichnet, das oberhalb der Luftaustrittsöffnungen (19.1) an der Außenseite der Seitenwand (1.1) des Gehäuses (1) Blechkiemen (21) zum Schutz gegen Regen und Schnee angeordnet sind.

9. Dachcontainer nach Anspruch 7 oder 8 dadurch gekennzeichnet, das innerhalb des Gehäuses (1) unterhalb der Luftaustrittsöffnung (21) eine vom Gehäuseinnenraum abgetrennte Sammelkammer (22) für eingetretenes Wasser angeordnet ist, in deren Boden eine in den Außenraum mündende Abflußöffnung (23) angeordnet ist.

10. Dachcontainer nach einem der Ansprüche 7 bis 9 dadurch gekennzeichnet, daß der mit der Abluftöffnung (17.2) des Ventilators (17) verbundene Überdruckraum (19) vom übrigen Gehäuseinnenraum durch Trennwände abgetrennt ist, durch welche mindestens eine staubdichte Belüftungstülle (27) geführt ist, zum Druckausgleich innerhalb des Gehäuses.

11. Dachcontainer nach einem der Ansprüche 1 bis 10 dadurch gekennzeichnet, daß innerhalb des Gehäuses (1) mindestens im Bereich der Seitenwände (1.1,1.2) eine unterhalb des Gehäusebodens (1.5) liegende Wassersammelrinne (25) angeordnet ist, die mit einem in den Außenraum führenden Schlauchanschluß (26) verbunden ist.

12. Dachcontainer nach einem der Ansprüche 1 bis 11, dadurch gekennzeichnet, daß an jeder der beiden Seitenkanten (2.1, 2.2) des Deckels (2) mindestens eine zweite Verriegelungsvorrichtung (6.3) angeordnet ist, die mit am Gehäuse (1) angeordneten Verriegelungselementen (33) derart zusammen wirkt, daß mindestens im jeweils nach einer Seite hin voll geöffneten Zustand des Deckels (2) auch beim Lösen der ersten Verriegelungsvorrichtung (4.3-7.3, 5.1, 8-11) ein Abheben des Deckels (2) aus der jeweiligen Gelenkverbindung (4.1-7.1, 4.2-7.2) verhindert wird.
